# FASCICULE DE BREVET EUROPEEN

(11) **EP 4 055 305 B1**
(45) Date de publication et mention de la délivrance du brevet: **30.07.2025**
(21) Numéro de dépôt: 20816275.0
(22) Date de dépôt: 05.11.2020
(51) Int. Cl.: F16J 13/18, G21F 7/005, G21F 7/04, G21F 7/047, B01L 1/02, F16J 13/24

(54) **DISPOSITIF DE TRANSFERT ETANCHE ENTRE DEUX VOLUMES CLOS COMPRENANT UN LEVIER DE COMMANDE EXTERNE**
VORRICHTUNG ZUR ABGEDICHTETEN ÜBERTRAGUNG ZWISCHEN ZWEI GESCHLOSSENEN VOLUMINA MIT EINEM ÄUSSEREN STEUERHEBEL
DEVICE FOR THE SEALED TRANSFER BETWEEN TWO ENCLOSED VOLUMES, COMPRISING AN EXTERNAL CONTROL LEVER

(30) Priorité: 05.11.2019 FR 1912411
(43) Date de publication de la demande: 14.09.2022
(73) Titulaire: ABC Transfer, 37170 Chambray-les-Tours (FR)
(72) Inventeur: FELIX, Julien, 41100 VENDOME (FR); SCHNEIDER, Jean-Luc, 41100 SAINT FIRMIN DES PRES (FR); GIRARD, Thierry, 75116 PARIS (FR)
(74) Mandataire: IP Trust
(86) Numéro de dépôt international: PCT/FR2020/052010
(87) Numéro de publication internationale: WO 2021/089952

(56) Documents cités:
- EP-A1- 2 946 833
- EP-B1- 0 505 269
- WO-A1-2013/053844
- FR-A1- 2 981 386
- FR-A1- 2 998 328
- FR-A1- 3 010 120

## Description

### DOMAINE TECHNIQUE DE L'INVENTION

L'invention concerne un dispositif de transfert étanche entre deux volumes clos.

Par volume, on entend dans la présente demande tout produit, équipement ou installation délimitant un volume. Ainsi, il peut s'agir d'une enceinte, d'un isolateur, d'un récipient, d'un conteneur, d'un sac, etc.

Par volume clos, on entend un volume isolé du milieu extérieur. Il peut s'agir notamment, mais non exclusivement, d'un volume de préparation, de stockage et/ou de manipulation de produits ne devant pas être en contact avec l'extérieur ou avec un utilisateur.

Le dispositif de transfert selon l'invention est destiné notamment, mais non exclusivement, à raccorder deux volumes clos en vue de transférer des produits de l'un à l'autre sans rupture du confinement. Il peut s'agir par exemple du transfert de produits dangereux comme certains produits biologiques, chimiques ou radioactifs, du transfert de composants tels que bouchons, flacons, pistons, seringues, etc., du transfert de dispositifs de contrôle environnementaux tels que des plaques de milieu de culture, des compteurs particulaires, etc., du transfert de systèmes de nettoyage, du transfert de liquides, de poudres, d'outils, du transfert de déchets vers l'extérieur de l'enceinte et/ou du transfert de tout élément nécessaire à la production ou à la maintenance de la ligne de production.

### ETAT DE LA TECHNIQUE

Les dispositifs de transfert étanches entre deux volumes clos comprennent de manière classique en soi deux brides délimitant respectivement une ouverture de passage dans les volumes clos, chacune des ouvertures de passage étant obturées par une porte. Les bride et porte d'un des volumes clos sont aptes à être raccordées respectivement à la bride et à la porte de l'autre volume clos par une liaison à baïonnettes et solidarisées entre elles sous l'action d'un mouvement de rotation de l'une des brides et porte associée par rapport à la bride et porte sur lesquelles elles sont accolées.

Les dispositifs de transfert étanches comprennent en outre des organes de commande d'ouverture et de fermeture des deux portes accolées et solidarisées entre elles. Les organes de commande, montés mobiles sur l'une des brides, sont manipulables depuis l'intérieur de l'un des volumes à l'aide de moyens de commande à distance tels que des télémanipulateurs ou des gants.

Afin de limiter les interventions au sein des volumes clos, lesquels peuvent contenir un environnement toxique, et donc diminuer les risques pour le manipulateur, il a été proposé des mécanismes de commande d'ouverture et de fermeture des doubles portes aménagés à l'extérieur des volumes clos, actionnable manuellement. A titre d'exemple, il peut être cité la demande de brevet FR2998328 laquelle se rapporte à une enceinte étanche comportant une ouverture pratiquée dans la paroi de l'enceinte, une bride fixée dans une ouverture, une porte d'accès obturant l'ouverture, ladite porte étant articulée sur la bride par une charnière, et un mécanisme de commande comprenant un système pignon et crémaillère coulissante entrainé par une molette, le pignon étant solidaire d'un élément mobile de la charnière de sorte que le déplacement de la crémaillère dans un sens ou dans l'autre suivant le sens de rotation de la molette provoque l'ouverture ou la fermeture de la porte. Un tel mécanisme de commande présente cependant l'inconvénient de rendre l'ouverture et la fermeture de la porte fastidieuses, peu aisées et non instantanées :il requiert en effet plusieurs tours de rotation de la molette pour ouvrir ou fermer entièrement la porte.

On connait également des mécanismes motorisés actionnables à distance. De tels mécanismes présentent cependant l'inconvénient de complexifier les dispositifs de transfert. Ils présentent également des inconvénients en termes de maintenance et d'encombrement, en particulier lorsque les moteurs sont disposés à l'intérieur des volumes clos.

L'invention vise à remédier à ces problèmes en proposant un dispositif de transfert étanche entre deux volumes clos dont l'ouverture et la fermeture de la double porte peut être commander de manière simple, fiable et rapide, sans risque de rupture de l'étanchéité et sans risque pour le manipulateur.

L'invention a également pour objet de proposer un dispositif de transfert requérant un effort moindre pour procéder à l'ouverture de la double porte.

### OBJET DE L'INVENTION

A cet effet, et selon un premier aspect, l'invention propose un dispositif de transfert étanche entre deux volumes clos, comprenant une première et une deuxième brides délimitant une ouverture de passage dans les volumes clos, lesdites première et deuxième brides étant aptes à être solidarisées l'une à l'autre par une première liaison à baïonnettes, une première et une deuxième portes obturant les ouvertures de passage, lesdites première et deuxième portes étant aptes à être solidarisées l'une de l'autre par une deuxième liaison à baïonnettes, la première porte étant montée articulée sur la première bride au moyen d'une charnière, ladite charnière comprenant un axe de charnière et une flasque fixée à la première porte et solidaire dudit axe de charnière. Le dispositif de transfert est remarquable en ce qu'il comporte un levier de commande manuel extérieur solidaire d'un axe rotatif traversant la première bride et couplé à l'axe de charnière de manière à ce que l'actionnement du levier de commande entraine l'axe de charnière et ainsi l'ouverture ou la fermeture de la première porte.

Avantageusement, l'axe rotatif s'étend parallèlement à l'axe d'ouverture de passage.

Selon l'invention, le dispositif de transfert étanche comporte un deuxième axe de rotation, avantageusement déporté par rapport à l'axe rotatif, couplé par des moyens d'entrainement à l'axe rotatif traversant la première bride d'une part et à l'axe de charnière d'autre part.

Selon un mode de réalisation, le dispositif de transfert comporte un organe de verrouillage de la deuxième bride sur la première bride lorsque les deux première et deuxième portes, assemblées, sont en position d'ouverture, ledit organe étant ménagé au niveau de la charnière. Avantageusement, l'organe de verrouillage comporte une lumière oblongue recevant le deuxième axe de rotation d'une part et un doigt de verrouillage s'étendant en direction de l'ouverture de passage, ledit organe de verrouillage étant mobile en translation suivant une direction perpendiculaire à l'axe de rotation de la charnière entre une position dans laquelle le doigt est en retrait au sein de la première bride et une position de verrouillage des brides entre elles dans laquelle le doigt saillit radialement de la première bride.

Il peut être prévu également que le dispositif de transfert étanche comprenne également un mécanisme de commande comportant un organe de commande monté mobile sur la première bride entre une position de fermeture et une position d'ouverture des première et deuxième portes, l'organe de commande étant situé diamétralement opposé à la charnière, un premier organe de blocage assurant le blocage dudit organe de commande en l'absence de la deuxième porte et un deuxième organe de blocage assurant le blocage dudit organe de commande en l'absence de la bride associée à la deuxième porte.

Avantageusement, ledit premier organe de blocage est mobile radialement entre une position de blocage dans laquelle il présente une extrémité périphérique engagée dans un alésage de blocage dudit organe de commande et une position de déblocage dans laquelle ladite extrémité périphérique est désengagée de l'alésage de blocage, le déplacement dudit premier organe de blocage étant assuré par une oreille du système de baïonnettes de la deuxième porte.

Avantageusement, l'organe de commande est solidaire d'un axe de rotation monté au travers d'une lumière excentrique ménagée dans le deuxième organe de blocage.

Avantageusement, le deuxième organe de blocage est mobile radialement entre une position de blocage dans laquelle la lumière excentrique bloque la rotation dudit organe de commande et une position de déblocage dans laquelle la lumière excentrique est déplacée pour permettre la rotation de l'organe de commande, le déplacement dudit premier organe étant assuré par une oreille du système de baïonnettes de la deuxième bride.

Il peut être prévu également que le dispositif de transfert comporte un organe de verrouillage de la deuxième porte sur la première porte lorsque les première et deuxième portes sont en position d'ouverture, ledit organe de verrouillage étant intégré dans la première porte, l'organe de verrouillage de la deuxième porte sur la première porte comportant un doigt de verrouillage s'étendant en direction de l'ouverture de passage et étant mobile radialement entre une position dans laquelle il est en retrait au sein de la première porte et une position de verrouillage des portes entre elles dans laquelle il saillit radialement de la première porte.

Avantageusement, l'organe de commande est mobile autour d'un axe tangentiel à la périphérie de ladite première bride, entre une position de fermeture où il forme un angle α avec le plan transversal de la bride, et une position d'ouverture où il forme un angle β supérieur à l'angle α avec le plan transversal, et entraîne l'ouverture des portes accouplées.

### BREVE DESCRIPTION DES FIGURES

D'autres caractéristiques et avantages de l'invention ressortiront de la description détaillée de l'invention qui va suivre en référence aux figures annexées et dans lesquelles :
- la figure 1 représente une vue de face depuis l'extérieur du premier volume clos du dispositif de transfert étanche selon un exemple de réalisation ;
- la figure 2 représente une vue en coupe selon la ligne II-II du dispositif de transfert étanche de la figure 1 ;
- la figure 3 représente une vue de détail en perspective de l'ensemble charnière du dispositif de transfert étanche de la figure 1 ;
- la figure 4 représente une vue de détail, depuis l'intérieur du volume, de l'ensemble charnière du dispositif de transfert étanche de la figure 1 ;
- la figure 5a représente une vue en coupe transversale du mécanisme de sécurité dans une position de verrouillage de la bride du deuxième volume ;
- la figure 5b représente une vue en coupe transversale du mécanisme de sécurité de la figure 5a dans une position de déverrouillage de la bride du deuxième volume ;
- la figure 5c représente une vue en coupe transversale du mécanisme de sécurité de la figure 5a dans une position de verrouillage de la bride du deuxième volume ;
- la figure 6 représente une vue en perspective depuis l'intérieur du premier volume clos du dispositif de transfert étanche selon un autre exemple de réalisation ;
- la figure 6a représente une vue de dessus de l'ensemble de fermeture de la figure 6 ;
- la figure 7a représente une vue en coupe transversale du mécanisme de présence de la porte du deuxième volume lorsque le deuxième volume est assemblé au premier volume, la porte du premier volume étant en position verrouillée ;
- la figure 7b représente une vue en coupe transversale du mécanisme de la figure 7a, la porte du premier volume étant en position déverrouillée ;
- la figure 7c représente une vue agrandie du mécanisme de la figure 7b ;
- la figure 8a représente une vue en coupe transversale du mécanisme de sécurité permettant de détecter la présence de la bride du deuxième volume lorsque celui-ci est assemblé au premier volume, la porte du premier volume étant en position verrouillée ;
- la figure 8b représente une vue en coupe transversale du mécanisme de sécurité de la figure 8a, la porte du premier volume étant en position déverrouillée ;
- la figure 9a représente une vue en coupe transversale du mécanisme de sécurité permettant de verrouiller la porte du deuxième volume avec la porte du premier volume, le mécanisme étant en position non verrouillée ;
- la figure 9b représente une vue en coupe transversale du mécanisme de sécurité de la figure 9a, le mécanisme étant représenté alors que les portes sont en cours d'ouverture ;
- la figure 9c représente une vue agrandie du mécanisme de sécurité de la figure 9a, le mécanisme étant représenté en position de verrouillage des portes entre elles ;
- la figure 9d représente une vue en coupe longitudinale du mécanisme de sécurité de la figure 9c, le mécanisme étant en position de verrouillage des portes entre elles ;
- la figure 10 représente une vue en perspective de dessus d'une variante de réalisation du mécanisme de sécurité permettant de verrouiller la bride du deuxième volume lorsque le deuxième volume est assemblé avec le premier volume et la porte du premier volume en position d'ouverture ;
- la figure 11 représente une vue en perspective de dessous du mécanisme de sécurité de la figure 10 ;
- la figure 12 représente une vue en coupe transversale du mécanisme de sécurité de la figure 10 associé à l'axe de charnière ;
- la figure 12a représente une vue en coupe transversale selon l'axe AA de l'ensemble illustré sur la figure 12 dans une position de déverrouillage de la bride du deuxième volume ;
- la figure 12b représente une vue de l'ensemble de la figure 12a dans une position de verrouillage de la bride du deuxième volume.

Pour plus de clarté, les éléments identiques ou similaires des différents modes de réalisation sont repérés par des signes de référence identiques sur l'ensemble des figures.

Dans ce qui suit, on désigne par « intérieur » ou « interne » d'un volume clos, ce qui dans ou dirigé vers l'espace intérieur du volume clos. Par analogie, on désigne par « extérieur » ou « externe » d'un volume clos, ce qui est situé hors de l'espace intérieur du volume clos ou dirigé à l'opposé de l'intérieur du volume clos.

### DESCRIPTION DETAILLEE DE L'INVENTION

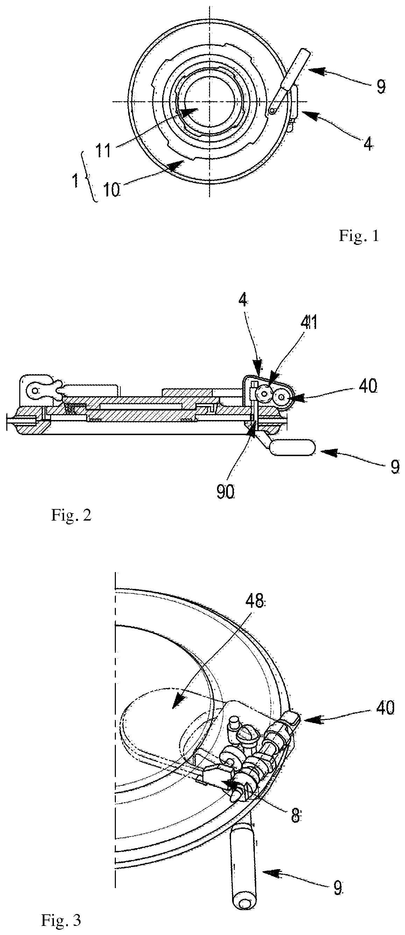

En relation avec les figures 1 à 5c, il est décrit un dispositif de transfert étanche entre deux volumes clos. Selon un mode de réalisation particulier, le premier volume clos est une enceinte tandis que le deuxième volume clos est un conteneur. Il s'agit bien entendu d'un exemple de réalisation, le dispositif selon l'invention n'étant pas limité à ce type de volume clos.

Le dispositif de transfert illustré comprend un premier ensemble 1, représenté sur la figure 1, comportant une première bride 10 délimitant une ouverture de passage dans un premier volume clos (non représenté) et une première porte 11 obturant l'ouverture de passage délimitée par la première bride 10. La première porte 11 est assemblée à la bride 10 par une charnière 4. Le dispositif de transfert comprend en outre un deuxième ensemble, non représenté, comportant une deuxième bride délimitant une ouverture de passage dans un deuxième volume clos et une deuxième porte obturant l'ouverture de passage délimitée par la deuxième bride.

On désignera par la suite la première bride 10 et la première porte 11 du premier volume, bride alpha 10 et porte alpha 11 et la deuxième bride et la deuxième porte du deuxième volume, bride bêta et porte bêta.

De manière classique, les brides alpha et bêta sont aptes à être solidarisées l'une à l'autre par une première liaison du type à baïonnettes. De même, les portes alpha et bêta sont aptes à être solidarisées l'une de l'autre par une deuxième liaison du type par exemple à baïonnettes. Pour ce faire, les brides et portes sont pourvues respectivement d'encoches et d'oreilles internes ou externes.

La porte alpha 11 est montée articulée sur la bride alpha 10 au moyen d'une charnière 4. Dans le mode de réalisation illustré, la charnière 4 comprenant un axe de charnière 40 et une flasque 48 fixée sur la face interne de la porte alpha 11 et solidaire de l'axe de charnière 40.

Selon l'invention, le dispositif de transfert comporte un levier de commande 9 manuel extérieur. Par levier de commande extérieur, on entend un levier situé en dehors du volume clos.

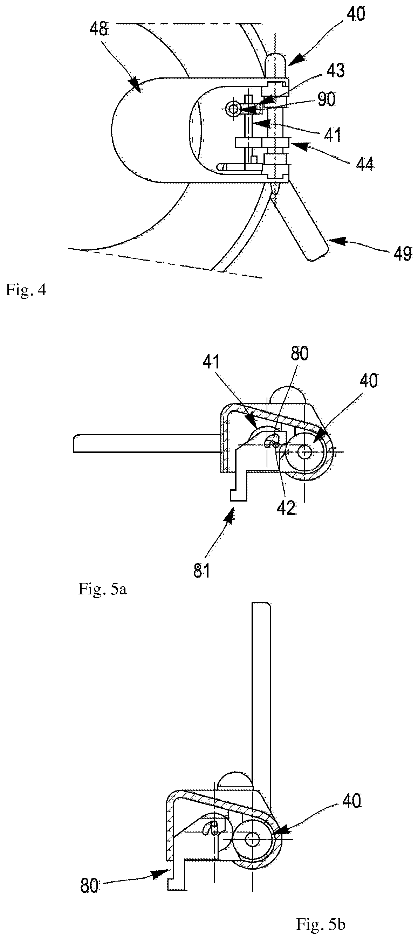

Le levier de commande 9 est solidaire d'un axe rotatif 90 monté au travers de la bride alpha 10. Dans l'exemple illustré, l'axe rotatif s'étend parallèlement à l'axe d'ouverture de passage. Cet axe rotatif 90 est couplé à l'axe de charnière 40 par l'intermédiaire d'un deuxième axe de rotation 41 et de moyens d'entrainement 43. Comme visible sur les figures 2 et 4, l'axe de rotation 41 est déporté par rapport à l'axe rotatif 90. Plus particulièrement, et selon une configuration particulière, l'axe rotatif 90 traversant est couplé au deuxième axe de rotation 41 par le biais d'une transmission roue/vis sans fin ou engrenage conique. De même, l'axe charnière 40 est couplé au deuxième axe de rotation 41 par le biais d'un pignon, d'une chaine ou d'une courroie.

Ainsi, lors de l'actionnement du levier de commande 9 suivant un mouvement de rotation parallèle à l'axe d'ouverture de passage, entrainant en rotation l'axe rotatif 90 sur lequel il est monté, ce dernier entraine le deuxième axe de rotation 41 par le biais des moyens d'entrainement 43 qui transmet à son tour le mouvement de rotation à l'axe de charnière 40 par l'intermédiaire des moyens d'entrainement 44 mis en œuvre entre le deuxième axe de rotation 41 et l'axe de charnière 40. Ce dernier entraine alors la flasque 48 fixée sur la porte alpha 11 et donc l'ouverture de cette dernière. Il sera procédé à la fermeture de la porte alpha de la même manière en actionnant le levier de commande en rotation en sens inverse.

Avantageusement, le dispositif de transfert comporte un organe de verrouillage 8 ayant pour fonction de verrouiller la bride bêta avec la bride alpha 10 lorsque les portes des deux volumes clos sont raccordées entre elles et placées en position d'ouverture à l'intérieur de l'enceinte. Il forme ainsi une sécurité dite d'anti-déverrouillage de la bride bêta porte ouverte.

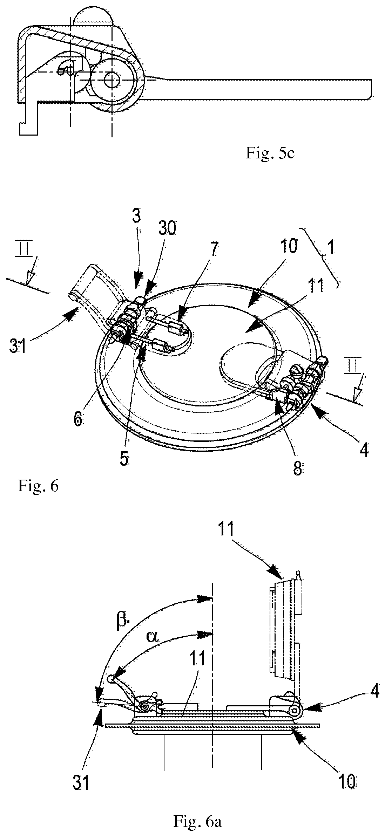

Dans le mode de réalisation illustré sur les figures 5a à 5c, l'organe de verrouillage 8 comporte une lumière 80 traversée par un pion d'extrémité 42 porté le deuxième axe de rotation 41. Il comporte en outre un doigt 81 dirigé vers l'ouverture de passage. Cet organe de verrouillage est mobile en translation au sein de la bride mobile pour passer d'une position dans laquelle le doigt est entièrement rétracté au sein de la bride alpha et une position de verrouillage dans laquelle l'organe est déplacé en translation de manière à disposer le doigt en saillie par rapport à la surface interne de la bride alpha 10.

Ainsi, lorsque la porte alpha 11 de l'enceinte est fermée et en l'absence de la partie bêta (porte bêta et bride bêta), l'organe de verrouillage 8 est placé de telle sorte que le doigt 81 ne fait pas saillie par rapport à la surface intérieure de la bride alpha 10. Lorsque la partie bêta est accosté sur l'enceinte et fixé à cette dernière, il est procédé au verrouillage des brides alpha et bêta entre elles en actionnant le levier de commande 9. Lors de l'ouverture des portes par actionnement du levier de commande 9, l'axe rotatif 90 entraine en rotation le deuxième axe de rotation 41 via les moyens d'entrainement 43. Lors de la rotation du deuxième axe de rotation, le pion 42 entraine le déplacement de l'organe de verrouillage en translation, pour positionner le doigt 81 dans l'encoche de la bride de la porte bêta de sorte à bloquer la rotation de la bride bêta par mise en butée d'une oreille externe de la bride bêta contre le doigt 81.

Les figures 6 à 9c illustrent un autre exemple de réalisation d'un dispositif de transfert. Ce dernier reprend les caractéristiques du dispositif de transfert précédemment décrit relatif à la mise en œuvre d'une ouverture de la porte alpha par l'extérieur par l'arrangement du levier de commande extérieur 9 / l'axe rotatif 90 / le deuxième axe secondaire 41 / l'axe de charnière 40 ainsi que la présence d'une sécurité anti-déverrouillage de la bride bêta par rapport à la bride alpha durant l'ouverture des portes alpha et bêta.

Le dispositif de transfert selon ce mode de réalisation comporte en sus un organe de commande 3 monté mobile sur la bride alpha 10 entre une position de fermeture dans laquelle la porte alpha 11 obture de façon étanche l'ouverture de passage délimitée par la bride alpha 10 et une position d'ouverture des portes alpha 11 et bêta. Dans le mode de réalisation illustré, l'organe de commande 3 est une poignée d'ouverture interne 31 de la porte alpha 11, activable manuellement et montée mobile en rotation autour d'un axe 30 disposé diamétralement opposé à la charnière 4 et situé avantageusement tangentiellement à la périphérie de la bride alpha 10 entre une position de fermeture où il forme un angle α avec le plan transversal de la bride, et une position d'ouverture où il forme un angle β avec le plan transversal, l'angle β étant supérieur à l'angle α. L'organe de commande 3 et la charnière 4 sont portés par la bride alpha 10.

Le dispositif de transfert selon ce mode de réalisation comporte de plus des sécurités supplémentaires relatives à l'ouverture conjointe des portes alpha et bêta des deux volumes raccordés et la mise en communication de l'intérieur de chacun d'eux.

Ainsi, le dispositif de transfert comporte un ensemble de mécanismes de sécurité comprenant deux organes de blocage de l'organe de commande 3 et deux organes de verrouillage des portes et brides entre elles. Ainsi, il comprend un premier organe de blocage 5 assurant le blocage de l'organe de commande 3 en l'absence de la porte bêta 21, un deuxième organe de blocage 6 assurant le blocage dudit organe de commande 3 en l'absence de la bride bêta 20 associée, un premier organe de verrouillage 7 assurant le verrouillage de la porte bêta 21 avec la porte alpha 11 et un deuxième organe de verrouillage 8 assurant le verrouillage de la bride bêta 20 avec la bride alpha 10 lorsque les deux portes 11, 21 assemblées sont ouvertes.

L'organe de blocage 5 et l'organe de verrouillage 7 sont intégrés dans la porte alpha 11 tandis que l'organe de blocage 6 est situé dans le bloc de commande et l'organe de verrouillage 8 est situé dans la charnière 4. Le fonctionnement de ces sécurités est décrit ci-après.

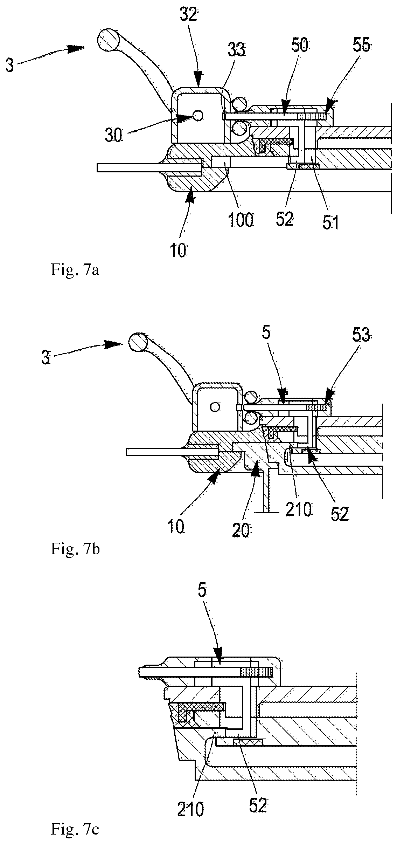

### Première sécurité : organe de blocage 5 (figures 7a, 7b, 7c)

Le premier organe de blocage 5 a pour fonction de bloquer l'organe de commande 3 en position de fermeture tant que la porte bêta 21 n'est pas verrouillée sur la porte alpha 11. Il forme ainsi une sécurité dite de présence de la porte bêta 21 sur la porte alpha 11.

Ce premier organe de blocage 5 est un verrou intégré à la porte alpha 11. Il comporte un doigt supérieur 50 et un doigt inférieur 52, parallèles entre eux, s'étendant parallèlement au plan de la porte alpha 11 et reliés entre eux par une paroi de jonction. L'organe de blocage 5 est monté coulissant radialement, i.e. perpendiculairement à l'axe de l'ouverture de passage délimitée par la bride alpha et à l'axe de rotation 30 de l'organe de commande 3, dans une cavité 51 ménagée dans la porte alpha 11 sous l'action et contre un moyen de rappel, ici un ressort de compression 55. L'organe de blocage 5 est ainsi mobile entre une position de blocage dans laquelle le doigt de blocage 50 est engagé dans un alésage de blocage 33 ménagé dans le carter 32 porté par la bride alpha 10 et dans lequel est logé l'axe 30 auquel est couplé l'organe de commande 3, et une position de déblocage dans laquelle le doigt de blocage 50 est désengagé de l'alésage de blocage 33. En l'absence du conteneur, l'organe de commande 3 est bloqué en position de fermeture par le doigt de blocage 50 engagé dans l'alésage de blocage 33 (figure 7a). Lorsque le conteneur est accosté sur l'enceinte, la bride bêta 20 et la porte bêta 21 sont mises en contact respectivement avec la bride alpha 10 et la porte alpha 11 de l'enceinte, les oreilles externes 200 de la bride bêta 20 étant placées dans les encoches 100 de la bride alpha 10. L'opérateur tourne ensuite dans le sens horaire (rotation de l'ordre de 60 degrés) la partie bêta (porte et bride bêta) dans la partie alpha (porte et bride alpha) jusqu'à arriver en contact avec une butée 14 de la bride alpha 10. La bride bêta 20 est alors bloquée en translation par la bride alpha 10. La porte bêta 21 est déverrouillée de la bride bêta 20 et verrouillée avec la porte alpha 11. Lors du mouvement de rotation pour connecter la partie bêta sur la partie alpha, l'une des oreilles internes 210 de la porte bêta 21 pousse le doigt inférieur 52 de l'organe de blocage 5, ce qui a pour effet de déplacer ce dernier dans la cavité 51, contre l'action du ressort de compression 55, en direction opposée de la bride alpha 10. L'organe de blocage 5 entraine dans son mouvement le doigt 50 lequel se désengage alors de l'alésage de blocage 33 du bloc 32. Ce dernier libéré, l'organe de commande 3 peut alors être actionné pour ouvrir les portes alpha et bêta verrouillées entre elles. Le verrouillage des portes entre elles sera décrit plus loin.

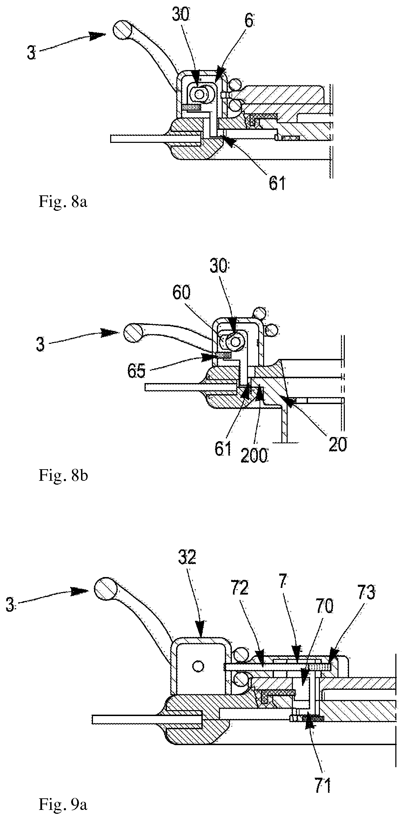

### Deuxième sécurité : organe de blocage 6 (figures 8a, 8b)

Le deuxième organe de blocage 6 a pour fonction de bloquer l'organe de commande 3 en position de fermeture tant que la bride bêta 20 n'est pas totalement solidarisée avec la bride alpha 10. Il forme ainsi une sécurité dite de présence de la bride bêta 20 sur la bride alpha 10.

Le deuxième organe de blocage 6 agit comme un loquet. Sa forme particulière permet le blocage mécanique de l'ouverture si la présence bride bêta 20 n'est pas constatée.

Plus particulièrement, l'organe de blocage 6 comporte une lumière excentrique 60 (dans l'exemple illustré, lumière ayant deux axes d'ouvertures parallèles et décalés) recevant l'axe de rotation 30 de l'organe de commande 3. L'organe de blocage 6 comporte également un doigt 61 s'étendant en saillie de la bride alpha 10. Cet organe de blocage 6 est monté coulissant dans le carter 32 radialement, i.e. perpendiculairement à l'axe de l'ouverture de passage délimitée par la bride alpha 10, sous l'action et contre un ressort de compression 65. Il est mobile entre une position de blocage dans laquelle la lumière excentrique 60 bloque le mouvement de rotation de l'axe de l'organe de commande 3 (figure 8a) et une position de déblocage dans laquelle la lumière excentrique est déplacée vers la périphérie externe de la bride alpha 10, pour permettre la rotation de l'axe de rotation 30 auquel l'organe de commande 3 est raccordé (figure 8b).

En l'absence du conteneur, l'axe de rotation 30 traverse la partie de la lumière 60 bloquant le mouvement de rotation dudit axe, et donc bloquant l'organe de commande 3 en position de fermeture. Lorsque le conteneur est accosté sur l'enceinte, la bride bêta 20 et la porte bêta 21 sont mises en contact avec la bride alpha 10 et la porte alpha 11, les oreilles externes 200 de la bride bêta 20 étant placées dans les encoches 100 de la bride alpha 10. La partie bêta est alors connectée à la partie alpha en tournant la partie bêta dans la partie alpha dans le sens horaire (rotation de l'ordre de 60 degrés) jusqu'à arriver en contact avec une butée 14 portée par la bride alpha 10. La bride bêta 20 est alors bloquée en translation par la bride alpha 10. Lors du mouvement de rotation pour connecter la partie bêta sur la partie alpha, l'oreille externe 200 de la bride bêta 20 pousse le doigt 61 du deuxième organe de blocage 6, ce qui a effet de déplacer l'organe de blocage 6 radialement, vers l'extérieur de la bride alpha 10, et donc de déplacer la lumière 60 par rapport à l'axe de rotation de l'organe de commande 3 dans la position dans laquelle l'axe de rotation 30 de l'organe de commande 3 est débloqué (figure 8b).

L'avantage de prévoir ces deux organes de blocage 5, 6 est d'assurer une double sécurité quant à l'ouverture des portes raccordées, ces dernières ne pouvant être ouvertes que si la bride bêta 20 et la porte bêta 21 sont respectivement bien raccordées avec la bride alpha 10 et la porte alpha 11 de l'enceinte. Ces deux organes de blocage constituent ainsi des sécurités de présence de la porte bêta et de la bride bêta sur la partie alpha associée.

### Troisième sécurité : organe de verrouillage 7 (figures 9a à 9d)

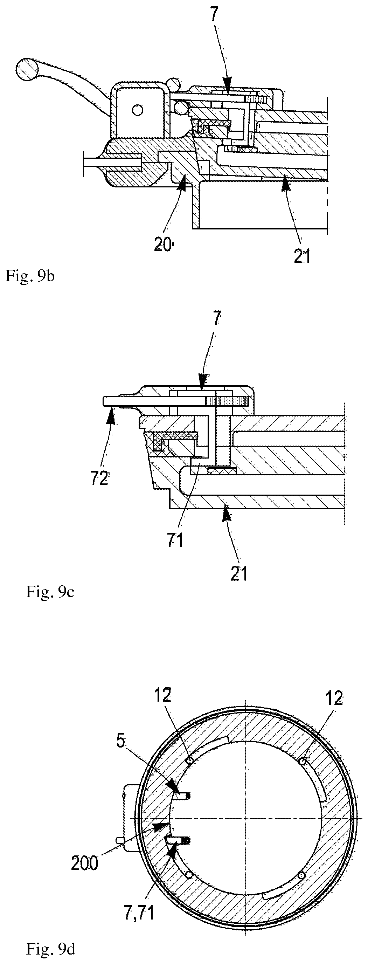

L'organe de verrouillage 7 a pour fonction de verrouiller la porte bêta 21 avec la porte alpha 11 lorsque l'organe de commande 3 passe en position d'ouverture des portes. L'organe de verrouillage 7 comporte un doigt inférieur 71 et un doigt supérieur 72, parallèles entre eux, s'étendant perpendiculairement au plan de la porte alpha 11 et reliés entre eux par une paroi de jonction. Le doigt inférieur 71 constitue un doigt de verrouillage (également référencé 71) apte à passer d'une position dans laquelle il est en retrait au sein de la porte alpha 11 et une position de verrouillage dans lequel il saillit radialement de la porte alpha 11. L'organe de verrouillage 7 est monté coulissant radialement dans une cavité 70 au sein de la porte alpha 11 contre et sous l'action d'un ressort de compression 73. Lorsque l'organe de commande 3 est en position de fermeture, l'organe de verrouillage 7 est maintenu en appui contre le carter 32 par l'intermédiaire du doigt supérieur 72 sous l'action du ressort de compression 73 (figure 9a). Lorsque l'organe de commande 3 passe en position d'ouverture des portes, la porte alpha 11 entraine dans son mouvement de rotation le doigt supérieur 72 qui se désengage du carter 32 (figures 9b et 9c). Lorsque le doigt supérieur 72 est totalement désengagé, l'organe de verrouillage 7 est poussé par le ressort de compression vers l'extérieur de la porte, entrainant le doigt de verrouillage 71 dans l'encoche de la porte bêta 21. Bloquée par une mise en butée d'une oreille interne 210 de la porte bêta 21 entre le doigt inférieur 71 et une butée 12 portée par la porte alpha 11, la porte bêta 21 ne peut alors plus tourner par rapport à la porte alpha 11 (figure 9d). Les figures 9a à 9c montrent le déplacement de l'organe de verrouillage 7 lors du passage de l'organe de verrouillage 7 de sa position de fermeture des portes (figure 9a) à sa position d'ouverture des portes (fig. 9c) en illustrant une position intermédiaire (figure 9b).

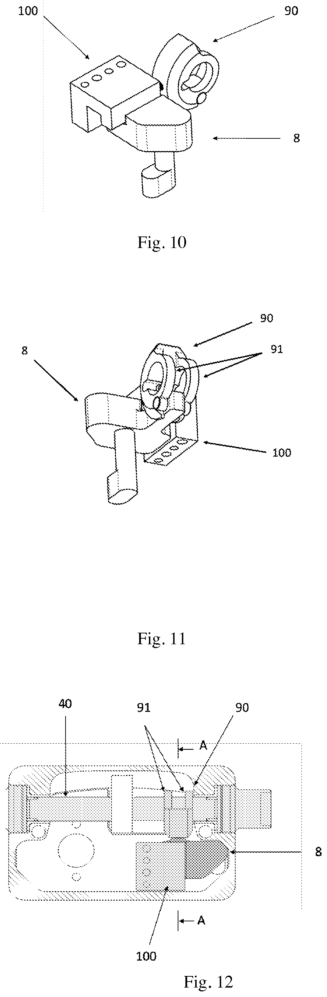

### Quatrième sécurité : organe de verrouillage 8 (figures 5a à 5c, variante figures 10 à 12b)

L'organe de verrouillage 8 a pour fonction de verrouiller la bride bêta 20 avec la bride alpha 10 lorsque les portes sont ouvertes à l'intérieur de l'enceinte. Il est associé à l'axe 40 de la charnière 4. Il forme une sécurité dite d'anti-déverrouillage de la bride bêta 20 porte ouverte.

Cet organe de verrouillage 8 comporte une lumière 80 traversée par un pion 42 porté un deuxième axe de rotation 41 couplé à l'axe 40 de la charnière 4 par des moyens d'entrainement 43, 44 (dans l'exemple illustré des cames). Le deuxième axe de rotation 41 est également couplé à un troisième axe 45 qui traverse la bride alpha 10 et qui est actionnable par un levier extérieur (non représenté) de sorte à permettre l'ouverture de la porte alpha 11.

L'organe de verrouillage 8 comporte un doigt 81 orienté vers l'intérieur de l'ouverture de passage. Il est mobile en translation vers l'intérieur de l'ouverture de passage de la bride alpha 10, perpendiculairement à l'axe de rotation 40 de la charnière 4.

Lorsque la porte alpha 11 est fermée, l'organe de verrouillage 8 est placé de telle sorte que le doigt 81 est en retrait par rapport à la surface intérieure de la bride alpha 10. Lors de l'ouverture des portes par actionnement du levier extérieur, le troisième axe 45 entraine en rotation le deuxième axe de rotation 41 via les moyens d'entrainement 43. Lors de la rotation de deuxième axe 41, le pion 42 coulisse le long de la lumière 80 aménagée pour entrainer l'organe de verrouillage 8 en translation et positionner le doigt de celui-ci dans l'encoche de la bride bêta 20. Bloquée par une mise en butée d'une des oreilles externes 200 de la bride bêta 20 contre le doigt 81 de l'organe de verrouillage et une butée 14 de la bride alpha 10, la bride bêta 20 ne peut alors plus tourner par rapport à la bride alpha 10. Dans le mode précédemment décrit, l'ouverture des portes est actionnée par un levier extérieur. Il est bien entendu évident qu'il s'agit d'un exemple de réalisation, et que la charnière pourrait ne pas être raccordée à un levier extérieur (dans ce cas la charnière serait dépourvue d'un troisième axe de rotation). Il serait alors procédé à l'ouverture de la porte manuellement, en tirant la porte alpha par l'intérieur, après déblocage de l'organe de commande 3.

Les figures 10 à 12b montrent une variante de réalisation pour verrouiller la bride bêta 20 avec la bride alpha 10 lorsque les portes sont ouvertes à l'intérieur de l'enceinte.

Dans cette variante, l'organe de verrouillage 8 est relié à l'axe 40 de la charnière 4 par une came, montée fixe autour de l'axe. La came 90 présente un premier profil de griffes 91 arrangé pour venir en contrainte sur un pion 82 porté par l'organe de verrouillage 8 et ainsi déplacer en translation ce dernier en direction de l'ouverture de passage lors de l'actionnement de rotation dans un sens (dans le sens des aiguilles d'une montre dans l'exemple illustré). La came 90 présente en outre un deuxième profil 92 arrangées pour bloquer le pion 82, et donc le déplacement en translation de l'organe de verrouillage 8 lorsque la porte alpha 11 est en position fermée. Avantageusement, l'organe de verrouillage 8 est guidé en translation dans un rail de guidage 100.

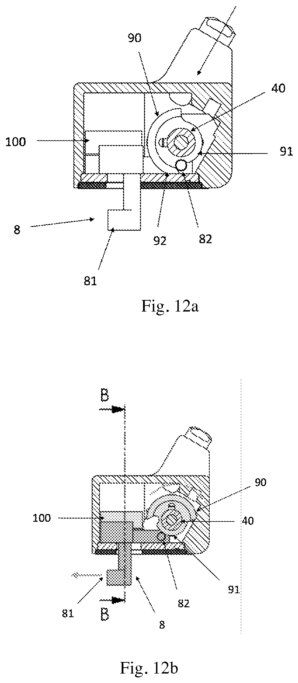

Ainsi, lorsque la porte alpha 11 est fermée, l'organe de verrouillage 8 est placé de sorte que le doigt 81 soit en retrait par rapport à la surface intérieure de la bride alpha 10 tandis que la came 90 est en position de blocage du pion 82 via le deuxième profil 92 (figures 12a). Lors de l'ouverture des portes, l'axe 40 de la charnière 4 tourne en rotation dans le sens horaire, comme illustré sur la figure 12b, entrainant en rotation la came 90 et par là même mettant en contrainte le pion 82 via le profil de griffes 91 de la came. Poussée par la came 90, l'organe de verrouillage 8 se déplace en translation le long du rail de guidage, guidé par le rail de guidage 100, en direction de l'ouverture de passage, pour venir positionner le doigt 81 dans l'encoche de la bride bêta 20.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Dispositif de transfert étanche entre deux volumes clos, comprenant
- une première et une deuxième brides (10, 20) délimitant une ouverture de passage dans les volumes clos, lesdites première et deuxième brides (10, 20) étant aptes à être solidarisées l'une à l'autre par une première liaison à baïonnettes,
- une première et une deuxième portes (11, 21) obturant les ouvertures de passage, lesdites première et deuxième portes (11, 21) étant aptes à être solidarisées l'une de l'autre par une deuxième liaison à baïonnettes,
- la première porte (11) étant montée articulée sur la première bride (10) au moyen d'une charnière (4), ladite charnière comprenant un axe de charnière (40) et une flasque (48) fixée à la première porte (11) et solidaire dudit axe de charnière (40),
**caractérisé en ce qu'**il comporte un levier de commande (9) manuel extérieur solidaire d'un axe rotatif (90) traversant la première bride (10) et couplé à l'axe de charnière (40) de manière à ce que l'actionnement du levier de commande (9) entraine l'axe de charnière (40) et ainsi l'ouverture ou la fermeture de la première porte (11), ainsi qu'un deuxième axe de rotation (41) couplé par des moyens d'entrainement (43, 44) à l'axe rotatif (90) traversant la première bride (10) d'une part et à l'axe de charnière (40) d'autre part.

2. Dispositif de transfert étanche selon la revendication 1, **caractérisé en ce que** l'axe rotatif s'étend parallèlement à l'axe d'ouverture de passage.

3. Dispositif de transfert étanche selon la revendication 1 ou la revendication 2, **caractérisé en ce que** l'axe de rotation (41) est déporté par rapport à l'axe rotatif (90).

4. Dispositif de transfert étanche selon l'une quelconque des revendications précédentes, **caractérisé en ce qu'**il comporte un organe de verrouillage (8) de la deuxième bride sur la première bride (10) lorsque les deux première et deuxième portes, assemblées, sont en position d'ouverture, ledit organe étant ménagé au niveau de la charnière (4).

5. Dispositif de transfert étanche selon la revendication 4, **caractérisé en ce que** l'organe de verrouillage (8) comporte une lumière oblongue recevant le deuxième axe de rotation d'une part et un doigt (81) de verrouillage s'étendant en direction de l'ouverture de passage, ledit organe de verrouillage étant mobile en translation suivant une direction perpendiculaire à l'axe de rotation (40) de la charnière (4) entre une position dans laquelle le doigt (81) est en retrait au sein de la première bride et une position de verrouillage des brides entre elles dans laquelle le doigt (81) saillit radialement de la première bride (10).

6. Dispositif de transfert étanche selon l'une quelconque des revendications précédentes, **caractérisé en ce qu'**il comprend en outre un mécanisme de commande comprenant :
- un organe de commande (3) monté mobile sur la première bride (10) entre une position de fermeture et une position d'ouverture des première et deuxième portes (11, 21), l'organe de commande étant situé diamétralement opposé à la charnière,
- un premier organe de blocage (5) assurant le blocage dudit organe de commande (3) en l'absence de la deuxième porte (21) et
- un deuxième organe de blocage (6) assurant le blocage dudit organe de commande (3) en l'absence de la bride associée à la deuxième porte (21).

7. Dispositif de transfert étanche selon la revendication 6, **caractérisé en ce que** ledit premier organe de blocage (5) est mobile radialement entre une position de blocage dans laquelle il présente une extrémité périphérique engagée dans un alésage de blocage (33) dudit organe de commande (3) et une position de déblocage dans laquelle ladite extrémité périphérique est désengagée de l'alésage de blocage, le déplacement dudit premier organe de blocage étant assuré par une oreille du système de baïonnette de la deuxième porte.

8. Dispositif de transfert étanche selon la revendication 6 ou la revendication 7, **caractérisé en ce que** l'organe de commande (3) est solidaire d'un axe de rotation monté au travers d'une lumière excentrique ménagée dans le deuxième organe de blocage.

9. Dispositif de transfert étanche selon la revendication 8, **caractérisé en ce que** le deuxième organe de blocage est mobile radialement entre une position de blocage dans laquelle la lumière excentrique bloque la rotation dudit organe de commande (3) et une position de déblocage dans laquelle la lumière excentrique est déplacée pour permettre la rotation de l'organe de commande (3), le déplacement dudit premier organe étant assuré par une oreille du système de baïonnette de la deuxième bride.

10. Dispositif de transfert étanche selon l'une quelconque des revendications 6 à 9, **caractérisé en ce qu'**il comporte en outre un organe de verrouillage (7) de la deuxième porte (21) sur la première porte (11) lorsque les première et deuxième portes sont en position d'ouverture, ledit organe de verrouillage (7) étant intégré dans la première porte (11). l'organe de verrouillage (7) de la deuxième porte (21) sur la première porte (11) comportant un doigt de verrouillage (71) s'étendant en direction de l'ouverture de passage et étant mobile radialement entre une position dans laquelle il est en retrait au sein de la première porte et une position de verrouillage des portes entre elles dans laquelle il saillit radialement de la première porte (11).

11. Dispositif de transfert étanche selon l'une quelconque des revendications 6 à 10, caractérisé en ce l'organe de commande (3) est mobile autour d'un axe tangentiel à la périphérie de ladite première bride (10), entre une position de fermeture où il forme un angle α avec le plan transversal de la bride, et une position d'ouverture où il forme un angle β supérieur à α avec le plan transversal, et entraîne l'ouverture des portes accouplées.

## Patentansprüche

1. Vorrichtung zur abgedichteten Übertragung zwischen zwei geschlossenen Volumina, umfassend:
- einen ersten und einen zweiten Flansch (10, 20), die eine Durchgangsöffnung in den geschlossenen Volumen begrenzen, wobei der erste und der zweite Flansch (10, 20) durch eine erste Bajonettverbindung miteinander verbunden werden können,
- eine erste und eine zweite Tür (11, 21), die die Durchgangsöffnungen verschließen, wobei die erste und die zweite Tür (11, 21) durch eine zweite Bajonettverbindung miteinander verbunden werden können,
- wobei die erste Tür (11) mittels eines Scharniers (4) an dem ersten Flansch (10) angelenkt ist, wobei das Scharnier eine Scharnierachse (40) und einen Flansch (48) umfasst, der an der ersten Tür (11) befestigt und fest mit der Scharnierachse (40) verbunden ist,
**dadurch gekennzeichnet, dass** er einen äußeren manuellen Steuerhebel (9) umfasst, der fest mit einer Drehachse (90) verbunden ist, die den ersten Flansch (10) durchquert und mit der Scharnierachse (40) so gekoppelt ist, dass die Betätigung des Steuerhebels (9) die Scharnierachse (40) und damit das Öffnen oder Schließen der ersten Tür (11) bewirkt, sowie eine zweite Drehachse (41), die über Antriebsmittel (43, 44) einerseits mit der Drehachse (90), die den ersten Flansch (10) durchquert, und andererseits mit der Scharnierachse (40) verbunden ist.

2. Abgedichtete Übertragungsvorrichtung nach Anspruch 1, **dadurch gekennzeichnet, dass** die Drehachse sich parallel zur Durchgangsöffnungsachse erstreckt.

3. Vorrichtung zur abgedichteten Übertragung nach Anspruch 1 oder Anspruch 2, **dadurch gekennzeichnet, dass** die Drehachse (41) gegenüber der Drehachse (90) versetzt ist.

4. Vorrichtung zur abgedichteten Übertragung nach einem der vorstehenden Ansprüche, **dadurch gekennzeichnet, dass** es ein Verriegelungselement (8) für den zweiten Flansch am ersten Flansch (10) umfasst, wenn die beiden ersten und zweiten Türen in zusammengebautem Zustand in der Öffnungsposition sind, wobei das Element in Höhe des Scharniers (4) angeordnet ist.

5. Vorrichtung zur abgedichteten Übertragung nach Anspruch 4, **dadurch gekennzeichnet, dass** das Verriegelungselement (8) einerseits eine längliche Öffnung aufweist, die die zweite Drehachse aufnimmt, und andererseits einen Verriegelungsstift (81), der sich in Richtung der Durchgangsöffnung erstreckt, wobei das Verriegelungselement in einer Richtung senkrecht zur Drehachse (40) des Scharniers (4) zwischen einer Position, in der der Stift (81) innerhalb des ersten Flansches zurückgezogen ist, und einer Position, in der die Flansche untereinander verriegelt sind und der Stift (81) radial aus dem ersten Flansch (10).

6. Vorrichtung zur abgedichteten Übertragung nach einem der vorstehenden Ansprüche, **dadurch gekennzeichnet, dass** es außerdem einen Steuermechanismus umfasst, umfassend:
- ein Steuerelement (3), das beweglich zwischen einer Schließstellung und einer Öffnungsstellung der ersten und zweiten Türen (11, 21) an dem ersten Flansch (10) angebracht ist, wobei das Steuerelement diametral gegenüber dem Scharnier angeordnet ist,
- ein erstes Sperrelement (5), das die Sperrung des Betätigungselements (3) bei Abwesenheit der zweiten Tür (21) gewährleistet, und
- ein zweites Sperrelement (6), das die Sperrung des Sperrelements (3) gewährleistet, wenn der mit der zweiten Tür (21) verbundene Flansch nicht vorhanden ist.

7. Vorrichtung zur abgedichteten Übertragung nach Anspruch 6, **dadurch gekennzeichnet, dass** das erste Sperrelement (5) radial zwischen einer Sperrstellung, in der es ein peripheres Ende aufweist, das in eine Sperrbohrung (33) des Steuerelements (3) eingreift, und einer Entsperrstellung bewegbar ist, in der das periphere Ende aus der Sperrbohrung ausgerückt ist, wobei die Bewegung des ersten Sperrelements durch eine Öse des Bajonettverschlusses der zweiten Tür gewährleistet wird.

8. Vorrichtung zur abgedichteten Übertragung nach Anspruch 6 oder Anspruch 7, **dadurch gekennzeichnet, dass** das Steuerelement (3) fest mit einer Drehachse verbunden ist, die durch eine exzentrische Öffnung in dem zweiten Sperrelement hindurch angebracht ist.

9. Vorrichtung zur abgedichteten Übertragung nach Anspruch 8, **dadurch gekennzeichnet, dass** das zweite Sperrelement radial zwischen einer Sperrstellung, in der die exzentrische Öffnung die Drehung des Steuerelements (3) sperrt, und einer Freigabestellung bewegbar ist, in der die exzentrische Öffnung verschoben ist, um die Drehung des Steuerelements (3) zu ermöglichen, wobei die Bewegung des ersten Elements durch ein Ohr des Bajonettverschlusses des zweiten Flansches gewährleistet wird.

10. Vorrichtung zur abgedichteten Übertragung nach einem der Ansprüche 6 bis 9, **dadurch gekennzeichnet, dass** sie außerdem ein Verriegelungselement (7) der zweiten Tür (21) an der ersten Tür (11) umfasst, wenn sich die erste und die zweite Tür in der geöffneten Position befinden, wobei das Verriegelungselement (7) in die erste Tür (11) integriert ist. wobei das Verriegelungselement (7) der zweiten Tür (21) an der ersten Tür (11) einen Verriegelungsstift (71) aufweist, der sich in Richtung der Durchgangsöffnung erstreckt und radial zwischen einer Position, in der er innerhalb der ersten Tür zurückgesetzt ist, und einer Position, in der er die Türen miteinander verriegelt und radial aus der ersten Tür (11) herausragt, beweglich ist.

11. Vorrichtung zur abgedichteten Übertragung nach einem der Ansprüche 6 bis 10, **dadurch gekennzeichnet, dass** das Betätigungselement (3) um eine tangentiale Achse am Umfang des ersten Flansches (10) zwischen einer Schließstellung, in der es einen Winkel α mit der Querebene des Flansches bildet, und einer Öffnungsstellung, in der es einen Winkel β größer als α mit der Querebene bildet, beweglich ist und das Öffnen der gekoppelten Türen bewirkt.

## Claims

1. Device for sealed transfer between two enclosed volumes, comprising
- a first and a second flange (10, 20) delimiting a passage opening in the enclosed volumes, wherein said first and second flanges (10, 20) are capable of being secured to each other by a first bayonet connection,
- a first and a second door (11, 21) closing the passage openings, wherein said first and second doors (11, 21) are able to be secured to each other by a second bayonet connection,
- the first door (11) being mounted articulated on the first flange (10) by means of a hinge (4), wherein said hinge comprises a hinge pin (40) and a plate (48) fixed to the first door (11) and integral with said hinge pin (40),
**characterized in that** it includes an external manual control lever (9) secured to a rotary axis (90) passing through the first flange (10) and coupled to the hinge pin (40) such that the actuation of the control lever (9) drives the hinge pin (40) and thus the opening or closing of the first door (11), as well as a second rotation axis (41) coupled by drive means (43, 44) to the rotary axis (90) passing through the first flange (10) on the one hand and to the hinge pin (40) on the other hand.

2. The device for sealed transfer according to claim 1, **characterized in that** the rotary axis extends parallel to the passage opening axis.

3. The device for sealed transfer according to claim 1 or claim 2, **characterized in that** the rotation axis (41) is offset relative to the rotary axis (90).

4. The device for sealed transfer according to any one of the preceding claims, **characterized in that** it includes a locking member (8) of the second flange on the first flange (10) when the two first and second doors, assembled, are in the open position, wherein said member is provided at the hinge (4).

5. The device for sealed transfer according to claim 4, **characterized in that** the locking member (8) includes an oblong light receiving the second rotation axis on the one hand and a locking finger (81) extending in the direction of the passage opening, wherein said locking member is movable in translation in a direction perpendicular to the rotation axis (40) of the hinge (4) between a position in which the finger (81) is set back within the first flange and a position for locking the flanges together in which the finger (81) projects radially from the first flange (10).

6. The device for sealed transfer according to any one of the preceding claims, **characterized in that** it further comprises a control mechanism comprising:
- a control member (3) mounted movably on the first flange (10) between a closed position and an open position of the first and second doors (11, 21), wherein the control member is located diametrically opposite the hinge,
- a first locking member (5) ensuring the locking of said control member (3) in the absence of the second door (21) and
- a second locking member (6) ensuring the locking of said control member (3) in the absence of the flange associated with the second door (21).

7. The device for sealed transfer according to claim 6, **characterized in that** said first locking member (5) is radially movable between a locking position in which it has a peripheral end engaged in a locking bore (33) of said control member (3) and an unlocking position in which said peripheral end is disengaged from the locking bore, wherein the movement of said first locking member is ensured by an ear of the bayonet system of the second door.

8. The device for sealed transfer according to claim 6 or claim 7, **characterized in that** the control member (3) is integral with a rotation axis, mounted through an eccentric light provided in the second locking member.

9. The device for sealed transfer according to claim 8, **characterized in that** the second locking member is radially movable between a locking position in which the eccentric light blocks the rotation of said control member (3) and an unlocking position in which the eccentric light is moved to allow rotation of the control member (3), wherein the movement of said first member is ensured by an ear of the bayonet system of the second flange.

10. The device for sealed transfer according to any one of claims 6 to 9, **characterized in that** it further includes a locking member (7) for locking the second door (21) on the first door (11) when the first and second doors are in the open position, wherein said locking member (7) is integrated in the first door (11), wherein the locking member (7) of the second door (21) on the first door (11) including a locking finger (71) extending in the direction of the passage opening and is radially movable between a position in which it is recessed within the first door and a position for locking the doors together in which it projects radially from the first door (11).

11. The device for sealed transfer according to any one of claims 6 to 10, **characterized in that** the control member (3) is movable around an axis tangential to the periphery of said first flange (10), between a closed position wherein it forms an angle α with the transverse plane of the flange, and an open position wherein it forms an angle β greater than α with the transverse plane, and causes the coupled doors to open.
